# FASCICULE DE BREVET EUROPEEN

(11) **EP 1 567 392 B1**
(45) Date de publication et mention de la délivrance du brevet: **20.12.2006**
(21) Numéro de dépôt: 03772254.3
(22) Date de dépôt: 24.10.2003
(51) Int. Cl.: B60R 13/08, B60J 5/00

(54) **FEUILLE D'ETANCHEITE ET D'INSONORISATION POUR UN ELEMENT DE CARROSSERIE**
DICHTUNGS- UND SCHALLDÄMMUNGSFOLIE FÜR EIN KARROSSERIEELEMENT
SEALING AND SOUNDPROOFING SHEET FOR A BODY ELEMENT

(30) Priorité: 02.12.2002 FR 0215171
(43) Date de publication de la demande: 31.08.2005
(73) Titulaire: Sofitec SA, 78530 Buc (FR)
(72) Inventeur: RIZZO, Pierre, F-92130 Isssy Les Moulineaux (FR)
(74) Mandataire: Cabinet Martinet & Lapoux
(86) Numéro de dépôt international: PCT/EP2003/011765
(87) Numéro de publication internationale: WO 2004/050432

(56) Documents cités:
- EP-A- 0 454 949
- DE-A- 4 416 972
- DE-A- 19 527 181
- DE-C- 4 334 984
- FR-A- 2 808 248
- US-A- 5 345 720
- US-A- 5 473 125

## Description

L'invention concerne une feuille d'étanchéité et d'insonorisation pour un élément de carrosserie, en particulier pour véhicule automobile, selon le préambule de la revendication 1. Une telle famille est connue du document DE 4 416 972 A1.

Dans la technique connue, les feuilles d'étanchéité et d'insonorisation des éléments de carrosserie, par exemple de porte de véhicule automobile, sont en matériau plastique cellulaire et sont thermoformées pour être adaptées aux configurations des tôles et des panneaux de finition. Pour améliorer les capacités d'insonorisation de cette feuille, on a déjà proposé de lui adjoindre une couche plus ou moins épaisse d'un autre matériau par exemple fibreux, ou de la former avec des saillies régulières, cubiques ou pyramidales par exemple, sur une de ses faces. Mais cela s'est traduit en général par une augmentation du prix de ladite feuille sans augmentation notable de ses performances acoustiques, sauf si l'on utilise des matériaux ayant une bonne qualité d'absorption des ondes sonores et qui sont relativement coûteux.

Il y a donc un besoin d'une feuille d'étanchéité et d'insonorisation du type précité qui soit mince, thermoformable et peu coûteuse et qui ait de bonnes qualités d'insonorisation.

L'invention a notamment pour but de répondre à ce besoin et particulièrement de multiplier les absorptions et les réflexions à la traversée par les ondes sonores.

Elle propose à cet effet une feuille d'étanchéité et d'insonorisation pour un élément de carrosserie, en particulier de véhicule automobile, cette feuille étant destinée à être montée entre une tôle et un panneau de finition et étant réalisée avec des saillies formées sur au moins une de ses faces, et destinées à se trouver au voisinage immédiat du panneau de finition ou en appui sur celui-ci pour, ralentir la circulation d'air entre la feuille et le panneau et diminuer les effets de résonance entre la feuille et le panneau, caractérisée en ce qu'au moins certaines des saillies ont des parois de forme plissée ou ondulée pour former un plus grand nombre d'obstacles sur le trajet des ondes sonores entre le panneau de finition et ladite feuille.

Les qualités d'insonorisation de la feuille selon l'invention sont dues à la combinaison des effets de réduction de la circulation de l'air et de la résonance entre la feuille et le panneau, et du plus grand nombre d'obstacles rencontrés par les ondes sonores réfléchies entre la feuille et le panneau, chaque rencontre d'un obstacle par une onde sonore se traduisant par une absorption et par une réflexion d'une partie de l'onde sonore.

Selon d'autres caractéristiques de l'invention :
- au moins certaines des saillies précitées sont imbriquées les unes dans les autres pour former des chicanes ralentissant la circulation de l'air entre la feuille et le panneau. Ces chicanes contribuent à réduire la circulation de l'air entre la feuille et le panneau ;
- au moins certaines des saillies précitées comportent une partie rentrante sur leur face tournée vers le panneau de finition, cette partie rentrante formant un résonateur acoustique qui absorbe l'énergie sonore ;
- au moins certaines des saillies précitées forment des moyens de guidage des ondes sonores vers des moyens d'absorption ou d'amortissement. Ces moyens d'absorption ou d'amortissement peuvent être constitués par des parties de la feuille ou du panneau de finition ou bien être des éléments indépendants interposés entre la feuille et le panneau.

De préférence, la feuille selon l'invention est réalisée en matériau thermoplastique cellulaire à cellules fermées et elle est thermoformée.

Elle peut être d'un type monocomposant ou d'un type composite, comprenant par exemple une couche de matière fibreuse ou autre.

L'invention propose également un élément de carrosserie, en particulier pour véhicule automobile, comportant une feuille d'étanchéité et d'insonorisation montée entre une tôle et un panneau de finition, caractérisé en ce que ladite feuille est du type décrit dans ce qui précède.

Cet élément de carrosserie peut être, en particulier, une porte d'un véhicule automobile, un capot moteur, un coffre, un tableau de bord, un tablier, un passage de roue, etc. Bien entendu, l'invention s'applique également à d'autres domaines que l'industrie automobile.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 est une vue schématique en coupe transversale d'une partie de porte de véhicule automobile comprenant une feuille d'étanchéité et d'insonorisation selon l'invention ;
- la figure 2 est une vue schématique partielle en coupe, à plus grande échelle, d'une partie de la feuille selon l'invention ;
- la figure 3 illustre schématiquement une caractéristique de cette feuille ;
- la figure 4 est une vue schématique partielle en coupe, à plus grande échelle, d'une partie de la feuille selon l'invention ;
- les figures 5 à 8 sont des vues schématiques en plan représentant diverses configurations et dispositions de saillies sur la feuille selon l'invention.

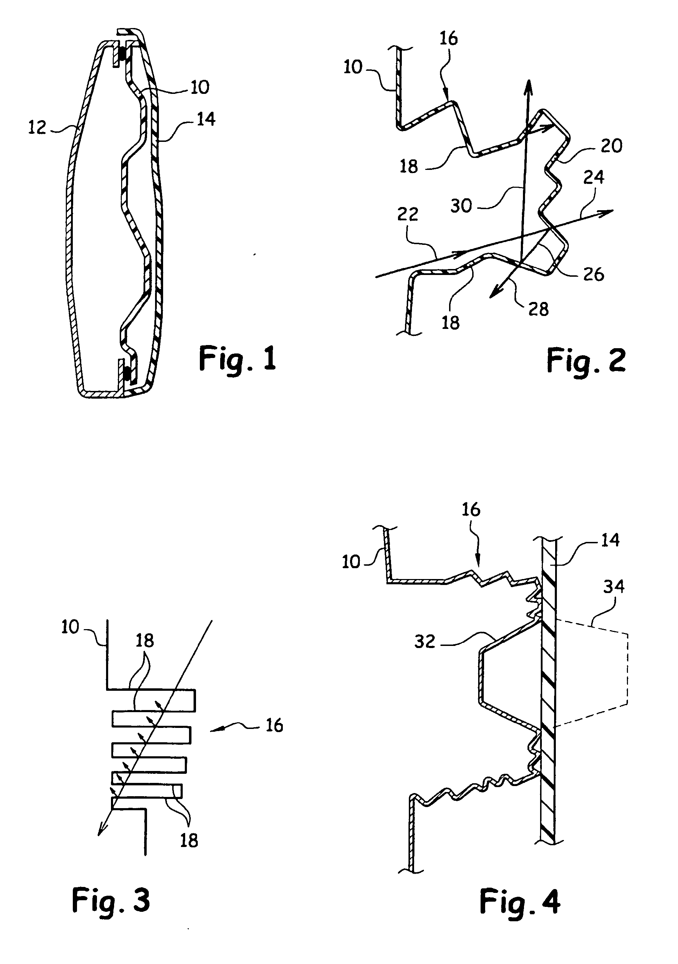

On a représenté schématiquement en figure 1 une vue en coupe d'une partie d'une porte de véhicule automobile, dans laquelle une feuille 10 d'étanchéité et d'insonorisation est fixée, par exemple par collage, sur la face interne d'une tôle 12 de la porte et est elle-même recouverte d'un panneau 14 de finition ou de garniture comportant en général des accessoires tels qu'un accoudoir, un vide-poche, etc., ainsi que des moyens de commande de la montée et de la descente d'une vitre, ce panneau 14 étant fixé sur la tôle 12 par des moyens habituels (des vis, des pions en sapin, etc.).

La feuille 10 est habituellement en thermoplastique cellulaire à cellules fermées, par exemple en mousse de polyéthylène ou de polypropylène, et elle a une épaisseur relativement faible, de l'ordre de quelques millimètres. Elle peut éventuellement comporter une couche de matière fibreuse ou autre sur sa face tournée du côté du panneau 14.

Cette feuille 10 est thermoformée pour avoir une forme générale adaptée à celles de la tôle 12 et du panneau 14, le thermoformage permettant également de former sur cette feuille des saillies qui vont améliorer sensiblement ses performances d'insonorisation.

Selon l'invention, ces saillies sont orientées vers le panneau 14 de finition et répondent à des critères tels que :
- elles se terminent à faible distance du panneau 14 ou sont en appui sur celui-ci,
- les parois des saillies forment des obstacles multiples sur le trajet des ondes sonores,
- ces saillies comportent ou forment avec le panneau 14 des résonateurs acoustiques,
- elles ont une forme et/ou une disposition irrégulière ou asymétrique,
- elles sont plus ou moins imbriquées les unes dans les autres.

Ces mesures visent à affaiblir les ondes sonores par des absorptions et réflexions multiples, à réduire la circulation de l'air et les résonances entre la feuille 10 et le panneau 14, et à guider les ondes sonores vers des moyens plus amortissants ou plus absorbants, qui sont formés par certaines parties de la feuille 10 et/ou du panneau 14 ou par des éléments indépendants montés entre la feuille et le panneau.

Comme on l'a représenté schématiquement en figure 2, une saillie 16 de la feuille 10 peut être de forme générale cylindrique ou cubique ou parallélèpipédique, et comporte une ou des parois latérales 18 qui sont plissées ou ondulées de façon régulière ou irrégulière, par exemple en soufflet, et une paroi frontale tournée vers le panneau 14 et qui est elle aussi de forme plissée ou ondulée. Lorsque la paroi frontale 10 est en appui sur le panneau 10, cet appui peut provoquer une déformation ou un écrasement limité de la ou des parois latérales 18 en accentuant leur forme plissée ou ondulée. Quand une onde sonore traverse la saillie 16 dans la direction indiquée en 22, elle est en partie transmise comme indiqué en 24, en partie absorbée dans la paroi frontale 20 et en partie réfléchie comme indiqué en 26. L'onde transmise 24 va elle-même être en partie réfléchie par le panneau 14 et va revenir sur la paroi frontale 20 de la saillie 16. L'onde réfléchie 26 va être en partie transmise comme indiqué en 28, en partie absorbée et en partie réfléchie comme indiqué en 30, et ainsi de suite.

On peut, comme représenté schématiquement en - figure 3, conformer les saillies 16 pour multiplier le nombre de parois 18 sur le trajet des ondes sonores, chaque traversée d'une paroi par l'onde sonore se traduisant par un affaiblissement sensible de l'énergie de l'onde transmise.

Il est avantageux également, comme représenté en figure 4, qu'une saillie 16 comporte dans sa paroi frontale 20 une partie rentrante 32 qui forme un résonateur acoustique avec le panneau 14, celui-ci fermant la cavité formée par la partie rentrante 32. L'air enfermé dans cette partie 32 a un rôle d'amortissement des ondes sonores.

La saillie 16 peut comporter la partie rentrante 32 directement de thermoformage, ou bien peut être produite avec une partie sortante 34, comme représenté en traits pointillés, cette partie sortante 34 étant retournée vers l'intérieur pour former la partie rentrante 32 quand la saillie 16 est mise en appui sur le panneau 14.

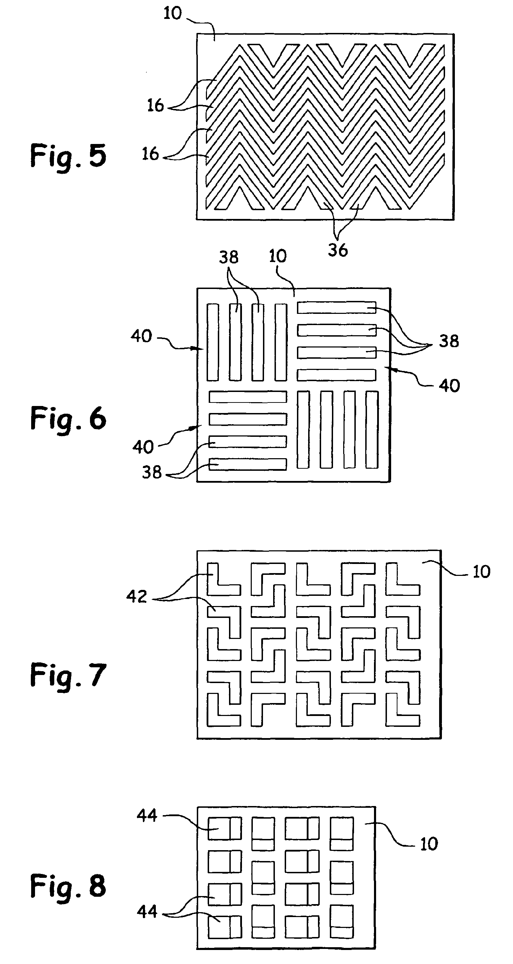

Les figures 5 à 8 représentent divers exemples de réalisation de saillies 16 sur la feuille 10, montrant des formes et/ou des dispositions irrégulières et imbriquées des saillies.

En figure 5, les saillies 16 sont des nervures parallèles qui s'étendent le long de lignes brisées pour former des chevrons alignés bout à bout, certaines nervures 36 le long des côtés de la feuille 10 formant des V imbriqués dans les chevrons.

En figure 6, les saillies de la feuille 10 forment des nervures droites allongées 38 à section rectangulaire, qui sont groupées en pavés adjacents 40 dans lesquels elles ont des directions différentes d'un pavé à l'autre.

En figure 7, les saillies de la feuille 10 forment des nervures 42 en L qui peuvent être agencées en rangées et en colonnes en ayant des orientations différentes d'une rangée et d'une colonne à l'autre et qui constituent ainsi un labyrinthe.

En figure 8, les saillies de la feuille 10 forment des triangles ou des parallélépipèdes 42 inclinés dans des directions différentes.

Dans ces diverses configurations, les saillies 16 qui sont au voisinage immédiat du panneau 14 ou en appui sur celui-ci forment des obstacles qui s'opposent à la circulation de l'air et à des effets de résonance entre la feuille 10 et le panneau 14.

En outre, il est possible de définir par ces saillies des volumes d'air fermés sur chaque face de la feuille 10 et d'utiliser ces volumes d'air pour amortir les ondes sonores de façon plus efficace, l'air ayant une fonction d'amortissement des ondes sonores lorsqu'il est enfermé de façon étanche et ne peut circuler.

Bien entendu, on peut donner aux saillies 16 des formes différentes de celles qui ont été représentées et décrites à titre d'exemple.

Un avantage essentiel de l'invention est que la feuille 10 décrite ci-dessus a des performances acoustiques qui correspondent à celles d'un matériau insonorisant de qualité moyenne, mais a un coût deux à trois fois inférieur à celui de ce matériau.

## Revendications

1. - Feuille d'étanchéité et d'insonorisation pour un élément de carrosserie, en particulier de véhicule automobile, cette feuille étant destinée à être montée entre une tôle (12) et un panneau de finition (14) et étant réalisée avec des saillies (16) formées sur au moins une de ses faces et destinées à se trouver au voisinage immédiat du panneau de finition (14) ou en appui sur celui-ci pour ralentir la circulation d'air entre la feuille (10) et le panneau (14) et diminuer les effets de résonance entre la feuille et le panneau, **caractérisée en ce qu'**au moins certaines des saillies (16) ont des parois (18, 20) de forme plissée ou ondulée pour former un plus grand nombre d'obstacles sur le trajet des ondes sonores entre le panneau (14) et ladite feuille.

2. - Feuille selon la revendication 1, **caractérisée en ce qu'**au moins certaines des saillies (16) sont imbriquées les unes dans les autres pour former des chicanes ralentissant la circulation de l'air entre la feuille et le panneau.

3. - Feuille selon la revendication 1 ou 2, **caractérisée en ce qu'**au moins certaines des saillies (16) comportent une partie rentrante (32) sur leur face tournée vers le panneau (14).

4. - Feuille selon l'une des revendications précédentes, **caractérisée en ce qu'**au moins certaines des saillies (16) forment des moyens de guidage des ondes sonores vers des moyens d'absorption ou d'amortissement.

5. - Feuille selon l'une des revendications précédentes, **caractérisée en ce qu'**au moins certaines saillies (16) délimitent des volumes d'air de part et d'autre de la feuille (10).

6. - Feuille selon l'une des revendications précédentes, **caractérisée en ce qu'**elle est réalisée en matériau thermoplastique cellulaire à cellules fermées.

7. - Feuille selon l'une des revendications précédentes, **caractérisée en ce qu'**elle comporte une couche d'une autre matière, par exemple fibreuse.

8. - Feuille selon l'une des revendications précédentes, **caractérisée en ce qu'**elle est thermoformée.

9. Elément de carrosserie, en particulier pour véhicule automobile, comprenant une feuille (10) d'étanchéité et d'insonorisation montée entre une tôle (12) et un panneau de finition (14), **caractérisé en ce que** la feuille (10) est du type décrit dans l'une des revendications précédentes.

## Claims

1. Sound-absorbing sealing sheet for a body element, in particular for a motor vehicle, this sheet being designed to be mounted between a metal sheet (12) and a finishing panel (14) and being made with projections (16) formed on at least one of its faces, and designed to be located in the immediate vicinity of the finishing panel (14) or bearing on it in order to slow down the circulation of air between the sheet (10) and the panel (14) and reduce the effects of resonance between the sheet and the panel, **characterized in that** at least some of the projections (16) have walls (18, 20) folded or corrugated in shape in order to form a greater number of obstacles on the path of the sound waves between the panel (14) and the said sheet.

2. Sheet according to Claim 1, **characterized in that** at least some of the projections (16) are interlocked with each other to form baffles that slow down the circulation of the air between the sheet and the panel.

3. Sheet according to Claim 1 or 2, **characterized in that** at least some of the projections (16) include a re-entrant portion (32) on their face which is turned towards the panel (14).

4. Sheet according to any one of the preceding claims, **characterized in that** at least some of the projections (16) form means for guiding sound waves towards absorbing or damping means.

5. Sheet according to any one of the preceding claims, **characterized in that** at least some of the projections (16) enclose volumes of air on either side of the sheet (10).

6. Sheet according to any one of the preceding claims, **characterized in that** it is made of cellular thermoplastic material with closed cells.

7. Sheet according to any one of the preceding claims, **characterized in that** it includes a layer of a different material, for example a fibrous material.

8. Sheet according to any one of the preceding claims, **characterized in that** it is thermoformed.

9. Body element, in particular for a motor vehicle, comprising a sound-absorbing sealing sheet (10) mounted between a metal sheet (12) and a finishing panel (14), **characterized in that** the sheet (10) is of the type described in one of the preceding claims.

## Patentansprüche

1. Dichtungs- und Schalldämpfplatte für ein Karosseriebauteil insbesondere eines Kraftfahrzeuges, wobei diese Platte dazu bestimmt ist, zwischen einem Blech (12) und einer Verkleidungsplatte (14) montiert zu werden, und mit Vorsprüngen (16) ausgebildet ist, die auf mindestens einer ihrer Seiten geformt und dazu bestimmt sind, sich in unmittelbarer Nähe der Verkleidungsplatte (14) zu befinden oder an dieser anzuliegen, um die Luftzirkulation zwischen der Platte (10) und der Verkleidungsplatte (14) zu verlangsamen und die Resonanzeffekte zwischen den Platten zu verringern, **dadurch gekennzeichnet, dass** mindestens einige der Vorsprünge (16) Wände (18, 20) mit faltiger oder welliger Form aufweisen, um eine größere Anzahl an Widerständen auf dem Weg der Schallwellen zwischen der Verkleidungsplatte (14) und der genannten Platte zu schaffen.

2. Platte nach Patentanspruch 1, **dadurch gekennzeichnet, dass** mindestens einige Vorsprünge (16) ineinander verschachtelt sind, um Hindernisse zu schaffen, die die Luftzirkulation zwischen Schalldämpf- und Verkleidungsplatte verlangsamen.

3. Platte nach Patentanspruch 1 oder 2, **dadurch gekennzeichnet, dass** mindestens einige Vorsprünge (16) auf der der Verkleidungsplatte (14) zugewandten Seite einen eingezogenen Teil (32) aufweisen.

4. Platte nach irgendeinem der vorangehenden Patentansprüche, **dadurch gekennzeichnet, dass** mindestens einige der Vorsprünge (16) Mittel zur Leitung der Schallwellen zu Absorptions- oder Dämpfungsmitteln bilden.

5. Platte nach einem der vorangehenden Patentansprüche, **dadurch gekennzeichnet, dass** mindestens einige der Vorsprünge (16) Luftvolumina beiderseits der Platte (10) begrenzen.

6. Platte nach einem der vorangehenden Patentansprüche, **dadurch gekennzeichnet, dass** sie aus geschlossenzelligem thermoplastischem Schaumstoff gefertigt ist.

7. Platte nach einem der vorangehenden Patentansprüche, **dadurch gekennzeichnet, dass** sie eine Schicht aus einem anderen Werkstoff, beispielsweise Faserwerkstoff, aufweist.

8. Platte nach einem der vorangehenden Patentansprüche, **dadurch gekennzeichnet, dass** sie warmgeformt ist.

9. Karosseriebauteil, insbesondere für Kraftfahrzeug, eine Dichtungs- und Schalldämpfplatte (10) umfassend, die zwischen einem Blech (12) und einer Verkleidungsplatte (14) angebracht ist, **dadurch gekennzeichnet, dass** die Platte (10) von der Art ist, die in einem der vorangehenden Patentansprüche beschrieben wird.
